Europäisches Patentamt

European Patent Office

Office européen des brevets

(19)

(11) Veröffentlichungsnummer: **0 263 339 B1**

(12) **EUROPÄISCHE PATENTSCHRIFT**

(45) Veröffentlichungstag der Patentschrift:
02.01.91 Patentblatt 91/01

(51) Int. Cl.⁵: **C10G 9/30, C10G 9/38,** C10G 1/00, B01J 8/08, B01J 8/12, C10B 27/00

(21) Anmeldenummer: 87113630.5

(22) Anmeldetag: 17.09.87

(54) Gaswandler für kohlenwasserstoffhaltige Schwelgase.

(30) Priorität: 30.09.86 DE 3633210

(43) Veröffentlichungstag der Anmeldung:
13.04.88 Patentblatt 88/15

(45) Bekanntmachung des Hinweises auf die
Patenterteilung:
02.01.91 Patentblatt 91/01

(84) Benannte Vertragsstaaten:
AT BE CH DE ES IT LI NL SE

(56) Entgegenhaltungen:
EP-A- 0 157 332
DE-A- 3 311 009

(73) Patentinhaber: Siemens Aktiengesellschaft
Wittelsbacherplatz 2
D-8000 München 2 (DE)

(72) Erfinder: May, Karl-Wolfgang
Kurt-Moosdorfer-Strasse 6
D-6368 Bad Vilbel (DE)
Erfinder: Unverzagt, Karlheinz
Hermann-Steinhäuser-Strasse 18
D-6050 Offenbach (DE)
Erfinder: Redmann, Eckhard, Dipl.-Ing.
Holbeinstrasse 19
D-6000 Frankfurt 70 (DE)

## Beschreibung

Die Erfindung betrifft einen Gaswandler für kohlenwasserstoffhaltige Schwelgase mit einer in einem gasdicht verschlossenen Gehäuse angeordneten Koksschüttung, einem Kokseinfüllschacht, einem Koksabzugsschacht, einem Spaltgasabzug und einer durch die Koksschüttung vom Spaltgasabzug getrennten Brennkammer mit einem Brenner für die Schwelgase, wobei das Gehäuse im wesentlichen senkrecht steht und sich im Bereich der Koksschüttung trichterförmig nach unten hin verjüngt.

Es ist bereits ein Gaswandler für kohlenstoffhaltige Schwelgase durch die DE-OS 33 11 009 bekannt geworden, bei dem die Brennkammer für die Schwelgase auf einem gasdicht verschlossenen Gehäuse aufgesetzt ist und bei dem die Brenngase durch eine auf einen Rost aufgebrachte Koksschüttung in einen unterhalb der Koksschüttung befindlichen Spaltgasabzug gedrückt werden. Um die Koksschüttung erneuern zu können, ist dieser vorbekannte Gaswandler mitsamt dem Rost um ca. 45° geneigt aufgestellt und sind ein Kokseinfüllschacht am oberen Ende und ein Koksabzugsschacht am unteren Ende des Rostes angebracht. Die Höhe der Koksschüttung wird durch einen parallel zum Rost im Abstand zu diesem angeordneten Rechen begrenzt. Der Schwelkoks kann bei diesem vorbekannten Gaswandler über einen Schieber diskontinuierlich abgezogen und über ein Vorratsgefäß oberhalb des Einfüllschachtes neu aufgefüllt werden.

Es ist eine Eigenart dieses Gaswandlers, daß die Koksschüttung nicht kontinuierlich erneuerbar ist, weil dabei infolge von Verbackungen mit dem Rost und infolge von Stauungen des Koksflusses über dem Rost keine konstante Schüttbettgeometrie mehr erreichbar wäre, mit all ihren nachteiligen Folgen für die Prozeßdaten. Außerdem wäre dann das Koksbett ständig einseitig verbraucht und einseitig frisch aufgefüllt, was ebenfalls keine optimalen Gesamtumwandlungsraten zuließe. Bei diesem Gaswandler muß daher das verbrauchte Koksbett nach Abschalten des Brenners vollständig entleert und neu gefüllt werden. Aber selbst bei diesem diskontinuierlichen Betrieb des vorbekannten Gaswandlers sind infolge der allmählichen Veränderungen des Koksbettes keine konstanten physikalischen und chemischen Prozeßdaten erreichbar.

Ein anderer Gaswandler ist aus der EP-A-0 157 332 bekannt. Dieser weist ein Gehäuse auf, das im wesentlichen senkrecht steht und sich im Bereich der Koksschüttung trichterförmig nach unten hin verjüngt. In diesem Gaswandler läßt sich die Koksschüttung kontinuierlich erneuern, indem unten Koks abgelassen und oben Koks eingespeist wird.

Damit in die horizontal angeordnete Brennkammer vom Gehäuse aus kein Koks eindringen kann, sind besondere Abtrennvorrichtungen vorgesehen, die nur einen engen Spalt freilassen, durch den kein Koks gelangen kann. Dadurch bedingt ist aber auch die Austrittsöffnung der Brennkammer sehr schmal.

Der Erfindung liegt die Aufgabe zugrunde, einen Gaswandler für kohlenwasserstoffhaltige Schwelgase anzugeben, bei dem ein Eindringen von Koks in die Brennkammer ausgeschlossen ist, und bei dem trotzdem ein ungehinderter Gasstrom von der Brennkammer in den Gaswandler jederzeit möglich ist.

Die genannte Aufgabe wird gemäß der Erfindung dadurch gelöst, daß die Symmetrieachse der Brennkammer um einen Winnkel von 20° bis 70° zur Vertikalen geneigt ist, und daß die Brennkammermündung durch eine von irgendeinem Rost oder Rechen freie Böschung der Koksschüttung gasdurchlässig abgeschlossen ist. Bedingt durch die genannte Neigung der Symmetrieachse der Brennkammer kann selbst bei einem schwerkraftbedingten Koksdurchlauf durch den Gaswandler kein Koks in die Brennkammer gelangen. Es bildet sich vielmehr die Brennkammermündung verschließend eine Böschung aus, deren Lage und Form weitgehend unverändert bleibt.

Damit wird der Vorteil erzielt, daß weder ein Rost, noch ein Rechen oder ein anderes mechanisches Mittel erforderlich ist, um ein Eindringen von Koks in die Brennkammer zu verhindern. Weiterhin wird der Vorteil erzielt, daß ohne zusätzliche Maßnahmen der den Gaswandler durchströmende Koks die Brennkammer stets mit einer so großen Oberfläche vollständig verschließt, die es stets gestattet, das gesamte anfallende Gas aufzunehmen. Ein Verbacken von Rosten oder Rechen mit Koks ist ausgeschlossen.

Wird darüber hinaus in Weiterbildung der Erfindung die Brennkammermündung deutlich tiefer gelegt als die Koksoberfläche gegenüber dem Spaltgasabzug, so wird dadurch einerseits erreicht, daß sich nicht nur auf der Gaseinströmseite gegenüber der Brennkammer sondern auch auf der Gasausströmseite gegenüber dem Spaltgasabzug freie Oberflächen des Koksbettes befinden und Roste mit all ihren Störmöglichkeiten gänzlich vermieden werden. Andererseits wird so auch die Voraussetzung geschaffen, um trotz Einströmung der Brenngase in die Koksschüttung über eine freie Oberfläche des Koksbettes, d.h. von oben nach unten, eine Strömung durch die Koksschüttung von unten nach oben zu gewährleisten, die die Koksschüttung allmählich erwärmt und die Staubabscheidung schwerkraftbedingt verbessert.

Besonders zweckmäßig ist es hierbei, die Mündung der Brennkammer in Weiterbildung der Erfindung mit ihrer Symmetrieachse senkrecht zu der sich in der Mündungsöffnung einstellenden freien Koksböschung auszurichten. Hierdurch erhält die freie Koksoberfläche überall den gleichen Abstand zum Brenner und wird für eine gleichmäßige Erwärmung derselben durch die heißen Brenngase gesorgt.

Die Seitenwände des Gaswandlers bilden beispielsweise im Bereich der Koksschüttung einen Winkel von 60° bis 85° mit der Horizontalen. Dadurch ist gewährleistet, daß der Koks stets allein durch die Schwerkraft, die auf ihn einwirkt, fließt.

Beispielsweise ist der Koksaustrag des Gaswandlers luftdicht abschließbar. Auch der Einfüllschacht des Gaswandlers kann luftdicht abschließbar sein.

In einem im Bereich der Koksschüttung angeordneten dachförmigen Entlastungskörper können Meßgeräte eingebaut sein.

Weitere vorteilhafte Ausgestaltungen des Gaswandlers nach der Erfindung sind den Ansprüchen 2 bis 26 zu entnehmen.

Mit dem Gaswandler nach der Erfindung wird der Vorteil erzielt, daß sich das Koksbett kontinuierlich erneuern läßt, ohne daß der Mündungsquerschnitt der Brennkammer verengt werden muß, um ein Eindringen von Koks in die Brennkammer zu verhindern. Die Mündung der Brennkammer ist stets mit Koks vollständig verschlossen.

Weitere Einzelheiten der Erfindung werden anhand eines in der Zeichnung dargestellten Ausführungsbeispieles erläutert. Es zeigen :

Fig. 1 einen Längsschnitt durch einen Gaswandler nach der Erfindung,

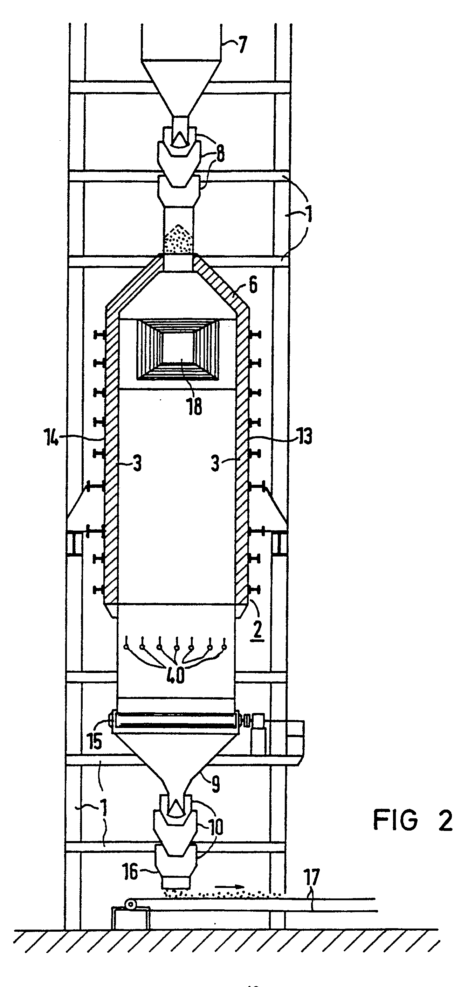

Fig. 2 einen weiteren gegenüber der Fig. 1 um 90° gedrehten Längsschnitt durch den Gaswandler der Fig. 1,

Fig. 3 einen Querschnitt durch den Gaswandler längs der Linie III der Fig. 1 und

Fig. 4 eine alternative Koksabzugseinrichtung

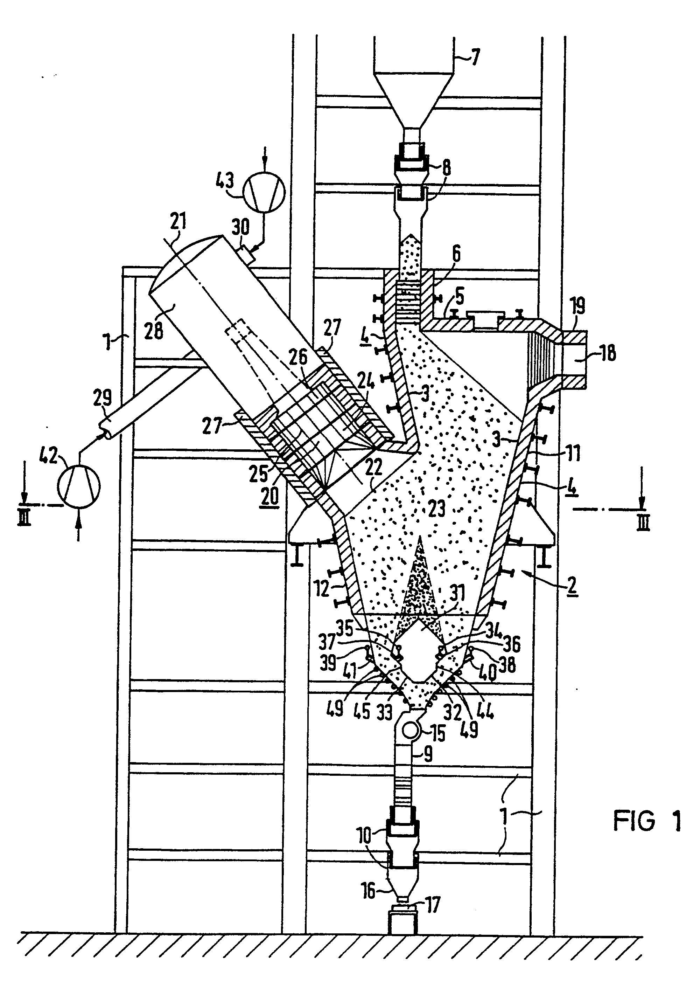

Die Figur 1 zeigt einen Längsschnitt durch den in einem Traggerüst 1 aufgehängten Gaswandler 2. Sie läßt dessen inneren Aufbau am besten erkennen. Der Gaswandler 2 umfaßt im wesentlichen ein gasdicht verschlossenes, innen mit Schamott 3 ausgekleidetes, trichterförmiges Gehäuse 4. Dessen obere Abdeckung 5 trägt einen Kokseinfüllschacht 6, der an einen darüber angeordneten Kokseinfülltrichter 7 angeschlossen ist. In dem Einfüllschacht 6 ist im Ausführungsbeispiel eine Segmentschieber- und Doppelklappenschleuse 8 eingebaut. Das untere Ende des trichterförmigen Gehäuses 4 mündet in einen Sammeltrichter 9, der seinerseits wieder in eine Segmentschieber- und Doppelklappenschleuse 10 mündet.

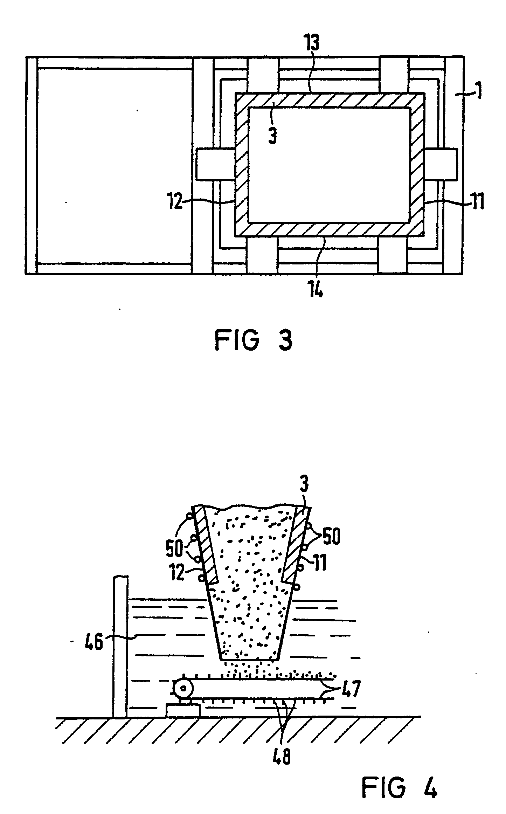

Wie die Figur 3 zeigt, hat der Gaswandler 2 einen rechteckigen Querschnitt. Dabei sind jeweils zwei einander gegenüberliegende Seitenwände 11, 12 des Gaswandlers 2 trichterförmig geneigt. Ihr Neigungswinkel zur Vertikalen beträgt im Ausführungsbeispiel 13°. Die beiden anderen Wände 13, 14 sind senkrecht gestellt, so daß das trichterförmige Gehäuse 4 über seine gesamte Höhenerstreckung hinweg die gleiche Breite hat. Dafür erweitert sich der Einfüllschacht 6 und verengt sich der Sammeltrichter 9 senkrecht zur Zeichenebene der Figur 1. Der Sammeltrichter 9 trägt an seinem oberen Rand eine über die gesamte Breite des Gehäuses 4 des Gaswandlers 2 reichende Austragswalze 15. Unterhalb der Segmentschieber- und Doppelklappenschleuse 10 schließt sich am unteren Ende des Sammeltrichters 9 ein Koksabzugstrichter 16 an, der unmittelbar über ein Transportband 17 endet.

Am oberen Rand des Gehäuses des Gaswandlers 2 ist in der einen trichterförmig geneigten Seitenwand 11 ein Spaltgasabzug 18 vorgesehen, der in eine hier nur angedeutete Spaltgasleitung 19 mündet. In der dem Spaltgasabzug 18 gegenüberliegenden trichterförmig geneigten Seitenwand 12 des Gehäuses 4 ist in etwa halber Höhe eine Brennkammer 20 eingelassen. Diese Brennkammer 20 ist in einem Winkel von etwa 50° gegenüber der Vertikalen geneigt und ragt mit ihrem unteren Rand bis etwa in die Mitte des trichterförmigen Gehäuses 4 hinein. Die Neigung der Brennkammer 20 zur Vertikalen ist so gewählt, daß ihre Symmetrieachse 21 senkrecht auf der sich in ihrem Mündungsbereich ausbildenden freien Böschung 22 der Koksschüttung 23 steht. Die Brennkammer hat einen zylindrischen Querschnitt und besteht aus mehreren, lösbar aufeinandergesteckten und in dichtem Eingriff miteinander befindlichen Zwischenringen 24, 25 und 26 (nur drei Stück dargestellt). Die Brennkammer 20 ist ebenfalls mit Schamotte 3 ausgekleidet und darüber hinaus mit einer thermischen Isolation 27 versehen. Auf der Brennkammer ist der Brenner 28 mit der Schwelgaszuleitung 29 und Luftzuleitung 30 befestigt.

Im unteren trichterförmigen Abschnitt des Gaswandlers 2 ist ein dachförmiger Entlastungskörper 31 eingesetzt. Dieser durchsetzt das Gehäuse 4 des Gaswandlers 2 in seiner gesamten Breite. Der Entlastungskörper 31 ist auf seiner Oberseite dachförmig abgeschrägt und an seiner Unterseite im wesentlichen trichterförmig ausgebildet. Unter dem Entlastungskörper 31 ist die Neigung der trichterförmig geneigten Seitenwände 11, 12 des Gehäuses 4 des Gaswandlers 2 auf nahezu 45° zur Vertikalen vergrößert. Sie verläuft dort parallel zu den beiden Wänden 32, 33 an der Unterseite des Entlastungskörpers 31. Letzterer trägt in seinem Inneren Kühlwasserleitungen 34, 35 und an die Kühlwasserleitungen angeschlossene, in die Koksschüttung 23 mündende Spritzdüsen 36, 37. Ebensolche an Kühlwasserleitungen 38, 39 angeschlossene Spritzdüsen 40, 41 sind in der gleichen Höhe an den Seitenwänden 11, 12 des Gaswandlers 2 angebracht. In diesem Bereich sind an der Außenwand des Gaswandlers 2 an ein hier nicht weiter dargestelltes Wärmeabführsystem angeschlossene Rohre 49 angeschweißt.

Vor der Inbetriebnahme des Gaswandlers 2 wird dessen Gehäuse 4 über die Kokseinfülltrichter 7 und die Segmentschieber- und Doppelklappenschleuse 8 mit einer Koksschüttung 23 einer Körnung von 20 - 40 mm gefüllt. Dabei bildet sich sowohl vor dem Reingasabzug 18 als auch vor der Mündung der Brennkammer 20 eine freie Koksböschung, deren Böschungswinkel ca. 50° zur Horizontalen geneigt ist. Die Neigung der Brennkammer 20 ist diesem Böschungswinkel angepaßt, so daß deren Symmetrieachse 21 senkrecht zur freien Koksböschung 22 ausgerichtet ist.

Beim Betrieb des Gaswandlers 2 wird über hier nur schematisch angedeutete Gasverdichter 42 Schwelgas und über einen hier ebenfalls nur schematisch dargestellten Luftverdichter 43 Frischluft in unterstöchiometrischer Menge in den Brenner 28 eingeleitet. Der zentrisch auf die zylindrische Brennkammer 20 aufgesetzte Brenner 28 erzeugt eine längs der Symmetrieachse 21 der Brennkammer 20 ausgerichtete Flamme. Dabei ist die Austrittsdüse des Brenners so ausgelegt, daß sich am Rand der Flamme ein torusförmiger Ringwirbel heißer Rauchgase bildet, der in die Flamme zurückgeführt wird. Dieser torusförmige Ringwirbel verhindert ein vorzeitiges Verlöschen der Flamme durch Unterkühlung und würde in solch einem Fall auch für ein ständiges Neuzünden derselben sorgen. Um eine Abkühlung der Flamme unter die für die Crackung der Schwelgase erforderliche Temperatur zu vermeiden und um so die zuzuführende Luftmenge noch weiter absenken zu können, ist die Brennkammer 20 mit der angedeuteten Wärmeisolierung 27 versehen.

Infolge der zylindrischen Ausführung der Brennkammer 20 und der senkrechten Ausrichtung zur freien Koksböschung 22 treffen die Brenngase der Flamme über den gesamten Querschnitt der Brennkammer hinweg mit der gleichen Temperatur auf die Koksböschung 22 auf. Diese heißen Brenngase, die keinen Sauerstoff mehr enthalten, strömen durch die freie der Brennkammermündung gegenüberliegende Koksböschung 22 der Koksschüttung 23 in diese hinein, durchströmen diese, um sie danach über die dem Spaltgasabzug 18 gegenüberliegende andere freie Oberfläche der Koksschüttung wieder zu verlassen. Dabei sorgt die gegensinnige Neigung der beiden freien Oberflächen der Koksschüttung 23 dafür, daß die parallelen Gaswege von der Brennkammer 20 zum Spaltgasabzug 18 durch die Koksschüttung 23 gleich lang sind. Die aufwärts gerichtete Gasströmung durch die Koksschüttung sorgt einerseits für eine Aufheizung und damit für eine entsprechende Reaktivität des Kokses. Zum anderen unterstützt bei dieser Gasführung die Schwerkraft die Staubabscheidung. Hierbei wird eine Art Gegenstrom-Festbettfiltration erreicht.

In der mit unterstöchiometrischer Sauerstoffbeigabe brennenden Flamme, in der eine Temperatur von über 1000°C erzeugt wird, werden die höheren Kohlenwasserstoffe thermisch gecrackt und im wesentlichen in Wasserstoff, Methan, Kohlendioxid, Kohlenmonoxid und Wasserdampf umgewandelt. Die für die vollständige Durchführung dieses Crack-Vorganges notwendige Verweilzeit in der heißen Brennkammer 20 läßt sich durch Anpassung der Länge der Brennkammer 20 durch Einsetzen oder Entfernen von Brennkammerzwischenringen 24, 25, 26 optimieren. Mangels Sauerstoff findet beim Durchströmen der heißen Brenngase durch die Koksschüttung keine Oxidation des Kokses statt. Vielmehr wird der heiße, reaktive Koks dazu benutzt, Schwermetallbestandteile an sich zu binden. Dabei werden die Schwermetalle infolge der reduzierenden Atmosphäre in unlöslicher und daher unbedenklich deponierfähiger Form an den Koks gebunden. Der durch den Koks filtrierte Staub gibt seine Kohlenstoffanteile weitestgehend über die Wassergasreaktion an das Gas ab und trägt so zur Heizwertsteigerung des Spaltgases bei.

Das zur Abkühlung des abzuziehenden Schwelkokses im Bereich des Entlastungskörpers 31 eingedüste Wasser verdampft und zieht als Dampf durch den heißen Schwelkoks. Hierbei reagiert dieser Dampf nach der Wassergasreaktion. Es werden $H_2$ und $CO_2$ gebildet. Das aus der Koksböschung gegenüber dem Spaltgasabzug austretende Spaltgas enthält somit keine Bestandteile an höheren Kohlenwasserstoffen, sondern besteht im wesentlichen aus Wasserstoff, Methan, Wasserdampf, Kohlendioxid und Kohlenmonoxid. Es kann als schadstofffreies Brenngas mit hohem Heizwert eingesetzt werden.

Der sich im Laufe des Betriebes des Gaswandlers 2 langsam an Staubteilchen und Schwermetallresten anreichernde Koks wird schließlich über die drehzahlgesteuerte Austragswalze 15 kontinuierlich in den Sammeltrichter 9 und über die Segmentschieber-und Doppelklappenschleuse 10 auf das Transportband 17 entleert. Über den Kokseinfülltrichter 7 und die Segmentschieber-und Doppelklappenschleuse 8 wird ständig frischer Koks in einer dem Austrag und Verbrauch äquivalenten Menge nachgeliefert.

Vor dem Austragen des verbrauchten Kokses mit der Austragswalze passiert dieser Koks den Entlastungskörper 31. Dabei wird er durch die beidseitig angebrachten Spritzdüsen 36, 37, 40, 41 mit Wasser abgespritzt und gekühlt, bevor er zur Austragswalze 15 gelangt. Durch dieses Kühlen wird ein Weiterbrennen des Kokses an der Luft nach dem Austragen unterbunden. Der Entlastungskörper hat außerdem noch die Funktion, den Querschnitt des Koksbettes unterhalb der Durchströmungszone zusätzlich einzuengen, ohne die Flankenneigung zu vergrößern. Außerdem kann die Wandneigung der Seitenwände 11, 12 des Gehäuses 4 unterhalb des Entlastungskörpers 31, wenn der Staudruck der Koksschüttung weitgehend abgefangen ist, flacher gewählt werden, ohne daß der abgekühlte Koks an der Wandung infolge Brückenbildung hängen bleibt. Dadurch wird die Gesamthöhe des Gaswandlers 2 bedeutend verringert. Zugleich erlaubt der Entlastungskörper 31 Proben des Koksbettes durch Koksentnahmeklappen 44, 45 in seinen unteren Wänden 32, 33 zu entnehmen.

Das Fehlen von Einbauten im Strömungsweg der Brenngase durch die Koksschüttung 23 sorgt für einen weitgehend gleichmäßigen Strömungsquerschnitt bei allmählicher Abnahme der Strömungsgeschwindigkeit infolge des sich nach oben hin weitenden Querschnittes der Koksschüttung. Die Steilheit der zur Vertikale geneigten beiden Wände des Gaswandlers und der Wegfall von Einbauten mit anderen Wandneigungswinkeln vermeiden Kanalbildungen in der Koksschüttung und das Hängenbleiben von Koksresten durch Brückenbildung. Infolge des kontinuierlichen Durchlaufes des Schwelkokses, der gleichlangen Gaswege durch die Koksschüttung und des gleichen Abstandes der Koksböschung 22 von der Flammenfront in der Brennkammer 20 lassen sich über die Betriebsdauer und über den Querschnitt hinweg die beabsichtigten gleichbleibenden physikalisch chemischen Bedingungen einstellen. Gleiches gilt auch für die Temperatur in der Brennkammer und die Verweilzeit der Brenngase in der Brennkammer. Daher kann der Umsetzungsgrad der höheren Kohlenwasserstoffe, der organischen Schadstoffe und der Staubabscheidung zeitlich und für die gesamten Strömungsquerschnitte optimiert werden. Auch ist der Entlastungskörper 31 so tiefgesetzt, daß der sich auf seinem Dach aufbauende stationäre Kokskegel nicht bis in den Gasweg durch die Koksschüttung reichen kann.

Infolge des Einspritzens von Kühlwasser im Bereich des Entlastungskörpers 31 wird nicht nur der Koks unterhalb der Zündtemperatur abgekühlt, sondern es wird zugleich Wasserdampf erzeugt, welcher sowohl mit den Kohlenwasserstoffanteilen des Schwelgases als auch mit dem Kokskohlenstoff im Sinne der Wassergasreaktion und des Boudouard-Gleichgewichtes reagiert. Die in der reduzierenden Atmosphäre an den Koks gebundenen Schwermetalle sind wasserunlöslich gebunden, so daß der Koks unbedenklich deponierfähig ist.

In Abwandlung der offenbarten Konstruktionen wäre es - wie die Figur 4 zeigt - auch denkbar, den Sammeltrichter 9 unter Weglassung der unteren Doppelklappenschleuse und der Austragswalze 15 in ein Wasserbad 46 münden zu lassen. Auf diese Weise ließe sich ein Luftabschluß über das Wasserbad erreichen. Die Eindüsung von Wasser im Bereich des Entlastungskörpers 31 könnte dann vermindert werden. Dafür müßte das im Wasserbad laufende Transportband 47 drehzahlgesteuert und mit Koksabzugsflächen 48 versehen sein. Aber auch in diesem Falle ist die Kühlung der unteren trichterförmig zusammenlaufenden Seitenwände 11,12 des Gaswandlers über an ein Wärmerückgewinnungssystem angeschlossene Rohre 50 sinnvoll.

Es ist ein besonderer Vorteil, daß bei dieser Behandlung der Schwelgase die Schwermetalle in unlöslicher Form an den Koks gebunden werden, was zur Folge hat, daß der anfallende Koks unbedenklich deponierfähig ist. Darüber hinaus läßt sich der Kohlenstoffgehalt des Staubes des Schwelgases im Gaswandler weitestgehend über die Wasserreaktion im Sinne einer Heizwerterhöhung des Spaltgases nutzen. Der schließlich aus dem Gaswandler mit dem Koks ausgetragene Staub ist ebenfalls unbedenklich deponierfähig. Er kann vom Koks getrennt werden. Der gereinigte Koks kann dann erneut dem Gaswandler zugeführt werden.

## Ansprüche

1. Gaswandler für kohlenwasserstoffhaltige Schwelgase mit einer in einem gasdicht verschlossenen Gehäuse (4) angeordneten Koksschüttung (23), einem Kokseinfüllschacht (6), einem Koksabzugsschacht (9), einem Spaltgasabzug (18) und einer durch die Koksschüttung (23) vom Spaltgasabzug (18) getrennten Brennkammer (20) mit einem Brenner (28) für die Schwelgase, wobei das Gehäuse (4) im wesentlichen senkrecht steht und sich im Bereich der Koksschüttung (23) trichterförmig nach unten hin verjüngt, **dadurch gekennzeichnet,** daß die Symmetrieachse (21) der Brennkammer (20) um einen Winkel von 20° bis 70° zur Vertikalen geneigt ist, und daß die Brennkammermündung durch eine von irgendeinem Rost oder Rechen freie Böschung (22) der Koksschüttung (23) gasdurchlässig abgeschlossen ist.

2. Gaswandler nach Anspruch 1, **dadurch gekennzeichnet** daß die Brennkammer (20) im Bereich der Koksschüttung (23) in einer Seitenwand (12) des Gehäuses (4) eingelassen ist.

3. Gaswandler nach Anspruch 1, **dadurch gekennzeichnet** daß die Mündung der Brennkammer (20) im Gehäuse (4) des Gaswandlers (2) deutlich tiefer angeordnet ist als der Spaltgasabzug (18).

4. Gaswandler nach Anspruch 1, **dadurch gekennzeichnet** daß die Mündung der Brennkammer (20) mit ihrer Symmetrieachse (21) senkrecht zu der sich in der Mündungsöffnung einstellenden freien Koksböschung (22) ausgerichtet ist.

5. Gaswandler nach Anspruch 1, **dadurch gekennzeichnet** daß sich eine freie Koksoberfläche gegenüber dem Spaltgasabzug (18) befindet.

6. Gaswandler nach Anspruch 5, **dadurch gekennzeichnet** daß die sich in der Mündung des Spaltgasabzuges (18) befindliche freie Koksoberfläche zur Erzeugung gleichlanger Gaswege durch die Koksschüttung (23) zu der der Brennkammer (20) gegenüber liegenden Gehäusewand (11) hin abfällt.

7. Gaswandler nach Anspruch 1, **dadurch gekennzeichnet** daß der Mündungsquerschnitt der Brennkammer (20) in die Koksschüttung (23) gleich oder kleiner ist als der Querschnitt der Koksschüttung seitlich des Mündungsquerschnittes.

8. Gaswandler nach Anspruch 1, **dadurch**

gekennzeichnet daß die Brennkammer (20) einen kreissymetrischen Querschnitt besitzt.

9. Gaswandler nach Anspruch 1, **dadurch gekennzeichnet** daß die Brennermündung in der Brennkammer (20) so ausgeführt ist, daß stets ein torusförmiger Ringwirbel heißer Rauchgase in die Flamme zurückgeführt wird.

10. Gaswandler nach Anspruch 1, **dadurch gekennzeichnet** daß dem Brenner (20) Schwelgase und vorgewärmte Luft zur unterstöchiometrischen Verbrennung zuführbar sind.

11. Gaswandler nach Anspruch 1, **dadurch gekennzeichnet** daß eine Luftmenge zufürbar ist, durch die eine Verbrennungswärme zu erzeugen ist, durch die die zur Crackung notwendige Temperatur aufrecht zu erhalten ist.

12. Gaswandler nach Anspruch 1, **dadurch gekennzeichnet** daß die Brennkammer (20) thermisch isoliert ist.

13. Gaswandler nach Anspruch 1, **dadurch gekennzeichnet** daß die Länge der Brennkammer (20) durch Zwischensetzen von Verlängerungsringen (24, 25, 26) veränderbar ist.

14. Gaswandler nach Anspruch 1, **dadurch gekennzeichnet** daß die Seitenwände (11, 12) im Bereich der Koksschüttung (23) einen Winkel von 60° bis 85° mit der Horizontalen bilden, so daß der Koks allein durch die Schwerkraft fließt.

15. Gaswandler nach Anspruch 1, **dadurch gekennzeichnet** daß das Gehäuse (4) einen rechteckigen Querschnitt hat.

16. Gaswandler nach Anspruch 1, **dadurch gekennzeichnet** daß der Austrag des Schwelkokses über eine drehzahlgesteuerte Austragswalze (15) erfolgt.

17. Gaswandler nach Anspruch 1, **dadurch gekennzeichnet** daß der Koksaustrag über einen Wasserverschluß (46) luftdicht verschlossen ist.

18. Gaswandler nach Anspruch 1, **dadurch gekennzeichnet** daß der Koksaustrag über eine Schleuse (10) luftdicht abschließbar ist.

19. Gaswandler nach Anspruch 1, **dadurch gekennzeichnet** daß der Einfüllschacht über eine Schleuse (8) luftdicht verschließbar ist.

20. Gaswandler nach Anspruch 1, **dadurch gekennzeichnet** daß unterhalb des vom Gas durchströmten Bereiches der Koksschüttung (23) wenigstens ein dachförmiger Entlastungskörper (31) eingesetzt ist.

21. Gaswandler nach Anspruch 20, **dadurch gekennzeichnet** daß der Entlastungskörper (31) so tief gesetzt ist, daß der sich über dem Dach des Entlastungskörpers im Koks bildende Koks-Staukegel nicht mehr in den vom Gas durchströmten Bereich der Koksschüttung (23) hineinragt.

22. Gaswandler nach Anspruch 20, **dadurch gekennzeichnet** daß der Entlastungskörper (31) Kühlwasserrohre (34, 35) und Düsen (36, 37) zum Einspritzen von Kühlwasser trägt.

23. Gaswandler nach Anspruch 20, **dadurch gekennzeichnet** daß im Entlastungskörper (31) Probeentnahmeöffnungen (44, 45) vorgesehen sind.

24. Gaswandler nach Anspruch 20, **dadurch gekennzeichnet** daß im Entlastungskörper (31) Meßgeräte einbaubar sind.

25. Gaswandler nach Anspruch 20, **dadurch gekennzeichnet** daß der untere trichterförmige Abschnitt des Gaswandlers (2) in Höhe des Entlastungskörpers (31) zur Wärmerückgewinnung gekühlt ist.

26. Gaswandler nach Anspruch 25, **dadurch gekennzeichnet** daß außen auf dem unteren trichterförmigen Abschnitt des Gaswandlers (2) in Höhe des Entlastungskörpers (31) Rohre (49,50) eines Wärmeabführsystems aufgeschweißt sind.

**Claims**

1. A gas converter for hydrocarbonaceous lowtemperature carbonisation gases having a coke charge (23) disposed in a gas-tight closed housing (4), a coke feeding chute (6), a coke discharge chute (9), a cracked gas discharge outlet (18) and a combustion chamber (20), separated by the coke charge (23) from the cracked gas discharge outlet and having a burner (28) for the low-temperature carbonisation gases, the housing (4) being disposed substantially vertically and tapering downwards in a funnel-shape in the region of the coke charge (23), characterised in that the axis of symmetry (21) of the combustion chamber (20) is inclined at an angle of 20° to 70° to the vertical, and in that the opening of the combustion chamber is closed off gas-permeably by an embankment (22) of the coke charge (23) which is free from any grid or rake.

2. Gas converter according to claim 1, characterised in that the combustion chamber (20) is formed in the region of the coke charge (23) in a side wall (12) of the housing (4).

3. Gas converter according to claim 1, characterised in that the opening of the combustion chamber (20) is arranged in the housing (4) of the gas converter (2) substantially lower than the cracked gas discharge outlet (18).

4. Gas converter according to claim 1, characterised in that the opening of the combustion chamber (20) is disposed with its axis of symmetry (21) perpendicular to the coke embankment (22) located in the mouth aperture.

5. Gas converter according to claim 1, characterised in that there is a free coke surface opposite the cracked gas discharge outlet (18).

6. Gas converter according to claim 5, characterised in that the free coke surface located in the opening of the cracked gas discharge outlet (18) declines towards the housing wall (11) disposed opposite the combustion chamber (20) so as to form gas paths through the coke charge (23) which are of equal length.

7. Gas converter according to claim 1, characterised in that the opening of the combustion chamber (20) into the coke charge (23) has a cross-sectional area which is equal to or smaller than the cross-sectional area of the coke charge laterally to the cross-sectional area of the opening.

8. Gas converter according to claim 1, characterised in that the combustion chamber (20) has a symmetrical circular cross-section.

9. Gas converter according to claim 1, characterised in that the burner opening in the combustion chamber is designed so that a toroidal annular turbulence of hot flue gases is always returned into the flame.

10. Gas converter according to claim 1, characterised in that low temperature carbonisation gases and preheated air can be supplied to the burner (20) for substoichiometric combustion.

11. Gas converter according to claim 1, characterised in that a quantity of air can be supplied by which a combustion heat is to be produced by means of which the temperature required for cracking can be maintained.

12. Gas converter according to claim 1, characterised in that the combustion chamber (20) is thermally insulated.

13. Gas converter according to claim 1, characterised in that the length of the combustion chamber (20) can be varied by inserting extension rings (24, 25, 26).

14. Gas converter according to claim 1, characterised in that the side walls (11, 12) in the vicinity of the coke charge (23) form an angle of 60° to 85° with the horizontal so that the coke flows solely by gravity.

15. Gas converter according to claim 1, characterised in that the housing (4) has a rectangular crosssection.

16. Gas converter according to claim 1, characterised in that removal of the low temperature carbonisation coke is carried out by means of a speed-controlled removal roller (15).

17. Gas converter according to claim 1, characterised in that the coke discharge is air-tightly sealed by means of a water closure (46).

18. Gas converter according to claim 1, characterised in that the coke discharge can be air-tightly sealed by means of a sluice (10).

19. Gas converter according to claim 1, characterised in that the feeding chute can be air-tightly sealed by means of a sluice (8).

20. Gas converter according to claim 1, characterised in that at least one roof-shaped relieving body (31) is disposed below the region of the coke charge (23) through which gas flows.

21. Gas converter according to claim 20, characterised in that the relieving body (31) is disposed at such a low level that the coke backup cone forming in the coke above the roof of the relieving body no longer projects into the region of the coke charge (23) through which gas flows.

22. Gas converter according to claim 20, characterised in that the relieving body (31) carries coolant water tubes (34, 35) and nozzles (36, 37) for spraying coolant water.

23. Gas converter according to claim 20, characterised in that sample removal apertures (44, 45) are provided in the relieving body (31).

24. Gas converter according to claim 20, characterised in that measuring instruments can be built into the relieving body (31).

25. Gas converter according to claim 20, characterised in that the lower funnel-shaped portion of the gas converter (2) on a level with the relieving body (31) is cooled for heat recovery.

26. Gas converter according to claim 25, characterised in that tubes (49, 50) of a heat dissipation system are welded on the outside of the lower funnel-shaped portion of the gas converter (2) on a level with the relieving body (31).

**Revendications**

1. Réacteur de reformage pour gaz de carbonisation contenant des hydrocarbures, comprenant un tas de coke (23 disposé dans une enceinte (4) fermée de manière étanche au gaz, un puits de chargement du coke (6), un puits d'évacuation du coke (9), une évacuation pour le gaz de craquage (18) et une chambre de combustion (20) séparée par le tas de coke (23) de l'évacuation pour le gaz de craquage (18) et comprenant un brûleur (28) pour les gaz de carbonisation, l'enceinte (4) étant sensiblement verticale et s'amincissant vers le bas en forme d'entonnoir dans la région du tas de coke (23), caractérisé, en ce que l'axe de symétrie (21) de la chambre de combustion (20) est incliné par rapport à la verticale d'un angle de 20° à 70° et en ce que l'embouchure de la chambre de combustion est fermée de manière perméable au gaz par un talus (22) du tas de coke (23), qui est exempt de toute grille ou râteau.

2. Réacteur suivant la revendication 1, caractérisé, en ce que la chambre de combustion (20) est encastrée, dans la région du tas de coke (23), dans une paroi latérale (12) de l'enceinte (4).

3. Réacteur suivant la revendication 1, caractérisé, en ce que l'embouchure de la chambre de combustion (20) dans l'enceinte (4) du réacteur (2) est nettement plus basse que l'évacuation pour le gaz de craquage (18).

4. Réacteur suivant la revendication 1, caractérisé, en ce que l'axe de symétrie (21) de l'embouchure de la chambre de combustion (20) est perpendiculaire au talus de coke (22) libre s'établissant dans l'orifice de l'embouchure.

5. Réacteur suivant la revendication 1, caractérisé, en ce qu'une surface libre du coke se trouve en regard de l'évacuation pour le gaz de craquage (18).

6. Réacteur suivant la revendication 5, caractérisé, en ce que la surface libre du coke se trouvant dans l'embouchure de l'évacuation pour le gaz de craquage (18) s'abaisse pour obtenir des trajets de gaz de même longueur dans le tas de coke (23) en direction de la paroi de l'enceinte (11) opposée à la chambre de combustion (20).

7. Réacteur suivant la revendication 1, caractérisé, en ce que la section transversale de l'embouchure de la chambre de combustion (20) dans le tas de coke (23) est égale ou est inférieure à la section transversale du tas de coke latéralement par rapport à la section transversale de l'embouchure.

8. Réacteur suivant la revendication 1, caractérisé, en ce que la chambre de combustion (20) possède une section transversale à symétrie circulaire.

9. Réacteur suivant la revendication 1, caractérisé, en ce que l'embouchure du brûleur dans la chambre de combustion (20) est telle qu'un tourbillonnement annulaire en forme de tore de gaz de fumée chaud est toujours ramené dans la flamme.

10. Réacteur suivant la revendication 1, caractérisé, en ce qu'au brûleur (28) peuvent être envoyés des gaz de carbonisation et de l'air préchauffé pour une combustion hypostoechiométrique.

11. Réacteur suivant la revendication 1, caractérisé, en ce que l'on peut amener une quantité d'air, par laquelle de la chaleur de combustion est produite pour le maintien de la température nécessaire au craquage.

12. Réacteur suivant la revendication 1, caractérisé, en ce que la chambre de combustion (20) est isolée thermiquement.

13. Réacteur suivant la revendication 1, caractérisé, en ce que la longueur de la chambre de combustion (20) peut être modifiée par interposition d'anneaux de prolongement (24, 25, 26).

14. Réacteur suivant la revendication 1, caractérisé, en ce que les parois latérales (11, 12) font dans la région du tas de coke (23) un angle de 60° à 85° avec l'horizontal, de sorte que le coke s'écoule simplement par gravité.

15. Réacteur suivant la revendication 1, caractérisé, en ce que l'enceinte (4) présente une section transversale rectangulaire.

16. Réacteur suivant la revendication 1, caractérisé, en ce que le déchargement du coke de carbonisation s'effectue par un rouleau de déchargement (15) dont la vitesse de rotation est commandée.

17. Réacteur suivant la revendication 1, caractérisé, en ce que le déchargement du coke est fermé de manière étanche à l'air par une fermeture hydraulique (46).

18. Réacteur suivant la revendication 1, caractérisé, en ce que le déchargement du coke peut être fermé de manière étanche à l'air par un sas (10).

19. Réacteur suivant la revendication 1, caractérisé, en ce que le puits de chargement peut être fermé de manière étanche à l'air par un sas (8).

20. Réacteur suivant la revendication 1, caractérisé, en ce que en-dessous de la partie du tas de coke (23) qui est traversée par du gaz est montée au moins un corps de déchargement 31 en forme de toit.

21. Réacteur suivant la revendication 20, caractérisé, en ce que le corps de déchargement (31) est monté si bas que le cône d'accumulation de coke, se formant dans le coke au-dessus du toit du corps de déchargement, ne pénètre plus dans la partie du tas de coke (23) dans laquelle passe le gaz.

22. Réacteur suivant la revendication 20, caractérisé, en ce que le corps de déchargement (31) porte des tubes d'eau de refroidissement (34, 35) et des buses (36, 37) de projection d'eau de refroidissement.

23. Réacteur suivant la revendication 20, caractérisé, en ce que dans le corps de déchargement (31) sont prévus des orifices de prélèvement d'échantillon (44, 45).

24. Réacteur suivant la revendication 20, caractérisé, en ce que dans le corps de déchargement (31) peuvent être incorporés des appareils de mesure.

25. Réacteur suivant la revendication 20, caractérisé, en ce que la partie inférieure en forme d'entonnoir du réacteur (2) est refroidie au niveau du corps de déchargement (31) pour récupérer de la chaleur.

26. Réacteur suivant la revendication 25, caractérisé, en ce qu'à l'extérieur et sur la partie inférieure en forme d'entonnoir du réacteur (2), sont soudés, au niveau du corps de déchargement (31), des tubes (49, 50) d'un système d'évacuation de la chaleur.

FIG 1

FIG 2

FIG 3

FIG 4